(19) Europäisches Patentamt
European Patent Office
Office européen des brevets

(11) EP 4 692 211 A1

(12) # EUROPEAN PATENT APPLICATION

(43) Date of publication:
**11.02.2026 Bulletin 2026/07**

(21) Application number: **24193659.0**

(22) Date of filing: **08.08.2024**

(51) International Patent Classification (IPC):
***C08L 23/14*** *(2006.01)* ***C08L 23/08*** *(2025.01)*
***C08F 210/06*** *(2006.01)* ***C08F 2/00*** *(2006.01)*
***B32B 27/32*** *(2006.01)* *C08F 210/08 (2006.01)*
*C08F 210/16 (2006.01)* *C08F 4/6592 (2006.01)*

(52) Cooperative Patent Classification (CPC):
(C-Sets available)
**C08F 210/06; B32B 27/32; C08L 23/142;**
C08F 4/65908; C08F 4/65912; C08F 4/65916;
C08F 2420/07; C08L 2203/16; C08L 2308/00
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **WANG, Jingbo**
  **4021 Linz (AT)**
- **FAWAZ, Joel**
  **4021 Linz (AT)**
- **SACCHETTI, Francisco**
  **4021 Linz (AT)**

(74) Representative: **TBK**
**Bavariaring 4-6**
**80336 München (DE)**

(54) **POLYMER DESIGN AND ELASTOMER ADDITION TO IMPROVE SEALING PROPERTIES**

(57) The present invention relates to a monolayer film made of a polypropylene-based composition (PC) comprising a specific single site catalysed ethylene-propylene-1-butene terpolymer base resin (SSC234) and a specific ethylene-based elastomer in predetermined amounts having improved sealing characteristics, good mechanical properties and improved optical properties.

EP 4 692 211 A1

(52) Cooperative Patent Classification (CPC): (Cont.)

C-Sets
**C08F 210/06, C08F 2/001;**
**C08F 210/06, C08F 4/65927;**
**C08L 23/142, C08L 23/0815;**
C08F 210/06, C08F 210/08, C08F 210/16,
C08F 2500/26, C08F 2500/36, C08F 2500/27,
C08F 2500/12, C08F 2500/35, C08F 2500/34,
C08F 2500/33

## Description

### Field of the invention

The present invention relates to a monolayer film made of a polypropylene-based composition (PC) comprising a specific single site catalysed ethylene-propylene-1-butene terpolymer base resin (SSC234) and a specific ethylene-based elastomer and to the use of a polypropylene-based composition (PC) comprising a specific single site catalysed ethylene-propylene-1-butene terpolymer base resin (SSC234) and a specific ethylene-based elastomer to produce a monolayer film or a layer of a multilayer film.

### Technical background

Currently packages are mainly based on multilayer structures as different layers serve different needs of properties. However, due to the requirements of sustainability (Design for Recyclability (DfR) approach), a lightweight solution and/or a simplified solution are highly appreciated. Moreover, the DfR regulations further define the limit of the amount of polyethylene (PE) in polypropylene (PP) and/or non-polyolefin (PO) in a PO blend.

Copolymers, such as terpolymer of ethylene-propylene-1-butene (C234 terpolymers), are the current state of art solution for films, where low sealing initiation temperature (SIT), high hot-tack forces, and lower extractables for safety of food industry are required. They can serve the needs of the current major application, e.g. sealing layers for BOPP and cast film.

One way of improving SIT through polymer design is by increasing the comonomer content, but this might not be the most feasible solution both technically and economically. Moreover, at a certain limit, extractables tend to increase. Another way is through post-reactor modification by elastomer blending. On the other hand, there are also other aspects that need to be considered such as the mechanical performance and the haze.

EP 1 358 252 B1 claims a bioriented polypropylene film (BOPP) wherein at least one layer comprises a propylene polymer composition comprising a propylene random copolymer containing at least 0.8 wt.-% of one or more comonomers selected from ethylene and C4-C10 $\alpha$-olefins, and having a melting temperature $T_m$ of 155°C or higher, a XCS (25°C) lower than 3 wt.-%, and a value of the ratio of the polymer fraction collected by TREF method in the temperature range from 25°C to 95°C to the fraction soluble in xylene at room temperature higher than 8 wt.-%/wt.-%; and a $MFR_2$ from 1 to 10 g/10min. However, only propylene-ethylene copolymers are exemplified, the $T_m$ and the haze are rather high and nothing is taught about SIT.

EP 2 994 309 B1 relates to a multi-layered polymer film, comprising a sealing layer and a base layer, wherein the sealing layer comprises a polypropylene, and wherein the polypropylene sealing layer comprises comonomer units derived from ethylene in an amount of from 0.5 wt.-% to 25 wt.-%, and from at least one C5-12 alpha-olefin in an amount of from 0.5 mol% to 4.0 mol%, has an XCS amount of at least 20 wt.-% (25°C), and the xylene solubles have an amount of ethylene-derived comonomer units of from 4 wt.-% to 50 wt.-%, and complies with the following relation: C2 XCS $\times$ XCS/100 / C2 total $\geq$ 0.90. However, no C234 terpolymers are disclosed, the XCS is very high and also mechanical properties such as impact properties leave room for further improvement.

WO 2016/039416 A1 claims a production method of an olefin copolymer containing structural units derived from 1-butene, comprising a step of copolymerizing at least a 1-butene and a propylene, optionally an $\alpha$-olefin having 2 or more carbon atoms with a specific metallocene catalyst, wherein the olefin copolymer includes at least structural units derived from 1-butene, with total content of structural units derived from ethylene and an $\alpha$-olefin having 4 or more carbon atoms (including 1-butene) in the range of 8 to 50 mol%, and wherein a $T_m$ is 50 to < 110°C or is not observed from DSC. The disclosed C234 terpolymers have low $T_m$ and high comonomer contents and leave room for further improvement for the desired film application and nothing is taught about SIT.

EP 3 064 548 B1 relates to a polypropylene composition being a binary blend comprising 2 polypropylene polymer fractions P1 and P2 in specific amounts: (A) 35 to 60 wt.-% of (P1) being a propylene copolymer comprising hexene-derived comonomer units in an amount of 0.5 to 2.5 wt.-% and (B) 65 to 40 wt.-% of (P2) being a propylene terpolymer comprising hexene-derived comonomer units in an amount of 4.0 to 10.0 wt.-% and ethylene-derived comonomer units in an amount of 0.1 to 1.0 wt.-%, and the composition has (i) a ratio of the hexene content of polymer fraction P2 to polymer faction P1 between 2.5 and 8.0, (ii) a ratio of the total hexane amount of the composition to the hexene amount of polymer fraction P1 between 1.5 and 4.0, (ii) a melt flow rate $MFR_2$ (230°C) in the range of 2.0 to 15.0 g/10min, (iii) a $T_m$ of from 128°C to 145°C, (iv) a crystallization temperature $T_c$ of from 82°C to 110°C, (v) a hexane solubles content of at most 1.0 wt.-% (vi) and an XCS amount in the range of 10 to 40 wt.-% (25°C). However, no C234 terpolymers are disclosed, the XCS is high and also the SIT leaves room for further improvement.

WO 2020/239561 A1 discloses a bimodal SSC-based propylene-ethylene random copolymer having a total C2 content from 2.5 to 5.5 wt.-%, modified with 5 to 30 wt.-% of a C3C4 based plastomer with modulus of 50 to 450MPa and $T_m$ of 60 to 110°C. However, no C234 terpolymers are disclosed, the XCS is rather high and the optical properties such as haze

and the mechanical properties such as tensile modulus leave room for further improvement.

WO 2022/167368 A1 discloses copolymer blends for sealing layers comprising C234 terpolymer and upgrading resin. However, the C234 terpolymer in the blend has a rather high XCS and a rather low $MFR_2$ and the blends require high amounts of upgrading resin.

EP 3 280 768 B1 relates to elastomer blends based on bimodal SSC random copolymers. However, no C234 terpolymers are disclosed, the XCS is rather high and the blends require high amounts of elastomeric modifier.

WO 2019/038134 A1 discloses high flow polypropylene compositions combining (a) 85 to 65 wt.-% of propylene-hexene (C3C6) copolymer with C6 > 2 wt.-% and narrow molecular weight distribution (MWD), and (b) 15 to 35 wt.-% of C2C3 plastomer with C2 content from 12 to 25 wt.-%. However, no C234 terpolymers are disclosed, the $MFR_2$ is high and the optical properties such as haze are improvable and the blends require high amounts of plastomer.

EP 3 567 079 A1 discloses blends of (a) 95 to 60 wt.-% C3C6-copolymer (C6 2.5 to 12 wt.-%) and (b) 5 to 40 wt.-% plastomer or LDPE. However, no C234 terpolymers are disclosed, the $MFR_2$ is low and the optical properties such as haze are improvable and the blends require high amounts of plastomer or LDPE. WO 2023/046824 A1 discloses a SSc-C3C4C2 terpolymer for cast film applications. However, no C234 terpolymers blends are disclosed and there is room for improvements regarding SIT.

Further, for manufacturing flexible and semi-rigid film packages, heat sealing is the predominant method. An important indication of good sealing performance is inter alia a low seal initiation temperature (SIT) necessary to support high speed on packaging machines and a broad sealing window. Furthermore, it is also desired to have a packaging film material exhibiting good mechanical properties such as impact strength and tensile modulus. In addition, especially for food or medical applications of the packaging material, low amount of extractables and good optical properties, such as low haze are envisaged. Finally, to move sustainability, the packaging films should be recyclable by falling within the ranks A-B of Recyclass DfR guidelines. However, it frequently turns out that improvement of one of these properties is achieved on the expense of one or more of the other properties.

Against this background there is still a need to develop safe films combining improved sealing characteristics, good mechanical properties and improved optical properties based on a polymer design allowing recyclability of the material. Thus, to provide a good balance between these characteristics, an optimization of the polymer design and a polymer composition recipe is needed.

## Summary of the invention

It is the object of the present invention to provide a monolayer film made of a polypropylene-based composition having balanced properties, that is recyclable, showing improved sealing characteristics, especially in terms of low SIT and broad sealing window, and improved optical properties, such as a low haze, while keeping good mechanical properties such as tensile modulus and impact properties, as well as the use of a polypropylene-based composition to produce a monolayer film or a layer of a multilayer film.

The inventors of the present invention surprisingly found that the object can be solved by providing a monolayer film made of a polypropylene-based composition (PC) comprising, based on the total weight of the PC,
75.0 to 95.0 wt.-% of a single site catalysed ethylene-propylene-1-butene terpolymer base resin (SSC234) having

- an ethylene (C2) content, according to quantitative $^{13}$C-NMR spectroscopy analysis, in the range of 0.5 to 2.5 wt.-% with respect to the total weight of the SSC234;
- a 1-butene (C4) content, according to quantitative $^{13}$C-NMR spectroscopy analysis, in the range of 5.5 to 10.0 wt.-% with respect to the total weight of the SSC234;
- a melt flow rate $MFR_2$, according to ISO 1133 at 230°C and 2.16 kg load, in the range of 3.00 to 35.0 g/10min;
- a xylene cold solubles (XCS) content, according to ISO 16152 at 25°C, in the range of 0.1 to 4.5 wt.-% with respect to the total weight of the SSC234;
- a melting temperature ($T_m$), according to DSC as described in the experimental section, in the range of 120.0 to 140.0°C;
- a crystallization temperature ($T_c$), according to DSC as described in the experimental section, in the range of 80.0 to 115.0°C;

  5.0 to 25.0 wt.-% of an ethylene-based elastomer having
- a density, according to ISO1183-1, in the range of 850.0 to 910.0 kg/m$^3$;
- a melt flow rate $MFR_2$, according to ISO 1133 at 190°C and 2.16 kg load, in the range of 0.10 to 80.0 g/10min.

By means of the above-identified configuration, in particular the tailored combination of the specific single site catalysed ethylene-propylene-1-butene terpolymer as base resin, having defined contents of commoner and XCS, defined melt flow behavior and predetermined melting and crystallization temperatures, with a low amount of specific ethylene-based elastomer of predetermined density and melt flow behavior, it is unexpectedly possible to provide a

monolayer film with balanced properties, being recyclable and achieving the surprising technical effects of improved sealing characteristics, especially in terms of low SIT and broad sealing window, and improved optical properties, such as a low haze, while keeping good mechanical properties such as tensile modulus and impact properties. That is, it is unexpectedly possible to attain favorable overall sealing film performance and properties by applying an optimized base polymer design and an optimized recipe of a polymer composition applying the base polymer with just low amount of the elastomer that still fall within the ranks A-B of Recyclass DfR guidelines.

The present invention further relates to the use of the polypropylene-based composition as indicated above to produce a monolayer film or a layer of a multilayer film.

Preferred embodiments of the invention are depicted in the dependent claims and a detailed description of the invention is provide in the following description.

## Detailed Description

The term "comprising" (as well as terms "containing", "including" or "having") as used in the present invention does not exclude other components. For the purposes of the present invention, the term "consisting of" is considered to be a preferred embodiment of the term "comprising of" (as well as terms "containing", "including" or "having) unless specifically defined otherwise. Likewise, if hereinafter a group is defined to comprise at least a certain number of embodiments, this is also to be understood to disclose a group, which preferably consists only of these embodiments, unless specifically defined otherwise. Further, unless explicitly described otherwise, the description of the present invention is to be understood so that one or more of any of the described preferred embodiments of the invention can be combined with the invention described in its most general features.

Further, where an indefinite or definite article is used when referring to a singular noun, e.g. "a", "an" or "the", this includes a plural of that noun unless something else is specifically stated.

In the following amounts are given in % by weight (wt.-%) unless it is stated otherwise.

When reference is made to a method or step or stage or reactor or apparatus (or similar) "for" producing or forming a certain material (e.g. polymer fraction) or "for" performing a certain action, this shall be understood that this step (or stage or reactor, etc.) is adapted to (configured to) produce (or form) that certain material or to perform this certain action.

The single site catalysed ethylene-propylene-1-butene terpolymer base resin refers to an ethylene-propylene-1-butene terpolymer base resin, which has been produced in the presence of a single site catalyst, such as a metallocene catalyst. The catalyst influences in particular the microstructure of the polymer. Accordingly, polypropylenes prepared by using a metallocene catalyst provide a different microstructure compared to those prepared by using Ziegler-Natta (ZN) catalysts, with the most significant difference being the presence of regio-defects in metallocene-made polypropylenes, which is not the case for polypropylenes made by Ziegler-Natta (ZN) catalysts.

Bi- or multimodal polymers are polymers having a bi- or multimodal distribution of one or more properties as obtainable by producing the polymer in two or multiple reactors coupled in series being operated under different conditions to obtain an in-reactor blend polymer. Bimodal propylene terpolymers may typically be bimodal with respect to comonomer content or bimodal with respect to molecular weight (as seen through the melt flow rates of the first fraction and the final composition).

## Monolayer film made of a polypropylene-based composition (PC)

The monolayer film of the present invention is made of a polypropylene-based composition (PC) comprising, based on the total weight of the PC,

75.0 to 95.0 wt.-% of a single site catalysed ethylene-propylene-1-butene terpolymer base resin (SSC234) having

- an ethylene (C2) content, according to quantitative $^{13}$C-NMR spectroscopy analysis, in the range of 0.5 to 2.5 wt.-% with respect to the total weight of the SSC234;
- a 1-butene (C4) content, according to quantitative $^{13}$C-NMR spectroscopy analysis, in the range of 5.5 to 10.0 wt.-% with respect to the total weight of the SSC234;
- a melt flow rate $MFR_2$, according to ISO 1133 at 230°C and 2.16 kg load, in the range of 3.00 to 35.0 g/10min;
- a xylene cold solubles (XCS) content, according to ISO 16152 at 25°C, in the range of 0.1 to 4.5 wt.-% with respect to the total weight of the SSC234;
- a melting temperature ($T_m$), according to DSC as described in the experimental section, in the range of 120.0 to 140.0°C;
- a crystallization temperature ($T_c$), according to DSC as described in the experimental section, in the range of 80.0 to 115.0°C;

5.0 to 25.0 wt.-% of an ethylene-based elastomer having

- a density, according to ISO1183-1, in the range of 850.0 to 910.0 kg/m$^3$;
- a melt flow rate $MFR_2$, according to ISO 1133 at 190°C and 2.16 kg load, in the range of 0.10 to 80.0 g/10min.

It is to be noted that the term 'monolayer film made of a polypropylene-based composition (PC)' in accordance with the present invention refers to a film that essentially consists of the PC and may optionally contain other component(s). The requirement applies that the PC and the other optional component(s), as far as being present, add up to 100 wt.-%, provided that the amount of the polypropylene-based composition (PC) accounts for at least 90.0 wt.-%, preferably at least 95.0 wt.-%, such as 95.0 to 100 wt.-% or 99.0 to 100 wt.-%, or even 100 wt.-% of the total weight of the monolayer film.

Further, the polypropylene-based composition (PC) constituting the monolayer film is characterized by comprising, based on the total weight of the PC, 75.0 to 95.0 wt.-% of a specific single site catalysed ethylene-propylene-1-butene terpolymer base resin (SSC234) and 5.0 to 25.0 wt.-% of an specific ethylene-based elastomer.

Preferably, the polypropylene-based composition (PC) comprises, based on the total weight of the PC, 80.0 to 95.0 wt.-%, preferably 85.0 to 93.0 wt.-%, of the SSC234 and 5.0 to 20.0 wt.-%, preferably 7.0 to 15.0 wt.-% of the ethylene-based elastomer. That is, the polypropylene-based composition (PC) in accordance with the present invention essentially comprises the SSC234 and the ethylene-based elastomer and may further contain other component(s) such as additive(s). The requirement applies that the SSC234, the ethylene-based elastomer and the other component(s), as far as being present, add up to 100 wt.-%, provided that the summed amount of the SSC234 and the ethylene-based elastomer accounts for at least 94.0 wt.-% of the RCP. Preferably, the PC of the present invention comprises, based on the total weight of the PC, 94.0 to 99.999 wt.-%, more preferably 96.0 to 99.99 wt.-%, more preferably 97.0 to 99.95 wt.-%, most preferably 97.5 to 99.90 wt.-%, of the summed amount of the SSC234 and the ethylene-based elastomer, thereby significantly facilitating the recycling of film formed of the PC. It is to be understood that if various ranges are indicated, the lower and upper limit(s) of the various ranges can be suitable combined to form another range and this general principle applies throughout the entire application. Further, the present invention can attain the envisaged technical effects by combining the SSC234 and the ethylene-based elastomer as the only polymer components, so that it is not necessary for the composition to contain polymer components other than the SSC234 and the ethylene-based elastomer. However, provided that the essential characteristics of the present invention are not impaired, other polymers may be present for attaining certain properties. In a preferred embodiment, the PC contains no other polymer components than the SSC234 and the ethylene-based elastomer, except for optional polymeric nucleating agent(s) and/or carrier polymers of a masterbatch for adding other component(s) such as additive(s). Further, the PC preferably comprises other component(s) such as additives.

Preferably, the PC comprises, based on the total weight of the PC, up to 6.0 wt.-%, preferably 0.01 to 3.5 wt.-%, more preferably 0.025 to 2.5 wt.-%, more preferably 0.05 to 1.5 wt.-%, or 0.075 to 1.0 wt.-%, additive(s), said additive(s) being preferably selected from the group consisting of slip agents, antiblocking agents, UV stabilizers, antistatic agents, alpha-nucleating agents, antioxidants and mixtures thereof. Notably, it is possible that two or more functions can be combined in the same molecule and such a constitution may be preferred to reduce the overall amount of additives. The additive(s) may be added to the composition in pure form or in the form of a masterbatch in a carrier resin. Where applicable and appropriate, the additive(s) may already be added to the SSC234 before blending with the ethylene-based elastomer or even during the polymerization of the SSC234. Preferably, at least antioxidant(s), more preferably at least antioxidant(s) and acid scavenger(s) or at least antioxidant(s) acid scavenger(s) and antiblocking agents, are present as additive(s). Such additives are well known in the art and ensure favorable stability and/or performance of the PC in its designated application.

Further, the present invention appreciates modifications e.g. in that the PC comprises optional component(s) other than the above additive(s), such as utilization agents, polymer additives, fillers, coloring agents, processing aids, and modifiers commonly known in the art, as long as the claimed requirements of the PC are satisfied. Thus, care must be taken not to add any optional component(s), which interfere with attaining the claimed properties of the PC.

The methods to prepare a polymer composition represent common knowledge and the polypropylene-based composition (PC) of the present invention can for instance be obtained by blending (melt mixing) the single site catalysed ethylenepropylene-1-butene terpolymer base resin (SSC234) with the ethylene-based elastomer and other components such as additive(s) as described above. Further, the other component(s) such as additive(s) may in the individual case already be pre-blended with the SSC234 and/or the ethylene-based elastomer before blending the SSC234 and the ethylene-based elastomer together. If technically feasible, other component(s) such as additive(s) may already be added during the polymerization of the SSC234 and e.g. a polymeric nucleating agent may be incorporated into the SSC234 as a polymer fraction by prepolymerization. The mixing of such components may be made in one or more steps. For mixing, a conventional compounding or blending apparatus, such as e.g. a Banbury® mixer, a 2-roll rubber mill, Buss-co-kneader, a single screw extruder with special mixing segments or a twin screw extruder may be used. The PC recovered from e.g. the extruder can be in the form of pellets or in a powdery state.

By means of the monolayer film made of a polypropylene-based composition (PC) combining a specific single site catalysed ethylene-propylene-1-butene terpolymer base resin (SSC234), as described in detail below, and the specific ethylene-based elastomer, as described in detail below, the present invention is able to achieve a monolayer film with balanced properties, being recyclable and achieving the surprising technical effects of improved sealing characteristics, especially in terms of low SIT and broad sealing window, and improved optical properties, such as a low haze, while keeping good mechanical properties such as tensile modulus and impact properties.

Specifically, the present invention is able to provide a monolayer film preferably having a suitable sealing initiation temperature SIT, determined on a 50 μm cast film as described in the experimental section, of less than 100°C, more preferably in the range of 60 to 99°C, most preferably 75 to 98°C. Such SIT ensures a film with suitable sealing properties that allows high speed on packaging machines.

Specifically, the present invention is able to provide a monolayer film preferably having a suitable broad sealing window, determined as the difference of the melting temperature $T_m$ of the SSC234 and the SIT of the PC, of at least 30.0°C, such as 30.0 to 40.0°C. Such broad sealing window ensures a film with a suitable broad processing window.

Specifically, the present invention is able to provide a monolayer film preferably having a haze, determined on a 50 μm cast film according to ASTM D1003, of less than 2.5%, more preferably in the range of 0.2 to 2.5%, most preferably 0.5 to 2.3%. Such haze ensures a film with suitable optical properties being desired in the application of the films of the present invention.

Specifically, the present invention is able to provide a monolayer film preferably having a Tensile Modulus (TM) in machine direction (MD), determined on a 50 μm cast film as described in the experimental section, of 350 MPa or more, more preferably 325 to 600 MPa or 350 to 550 MPa. In addition, the present invention is able to provide a monolayer film preferably having a Tensile Modulus (TM) in traverse direction (TD), determined on a 50 μm cast film as described in the experimental section, of 320 MPa or more, more preferably 320 to 570 MPa or 320 to 520 MPa. In this case, the present invention is able to achieve favorable stiffness properties and can thus be used in applications requiring a certain stiffness behavior.

Specifically, the present invention is able to provide a monolayer film preferably having a Tensile Strength (TS) in machine direction (MD), determined on a 50 μm cast film as described in the experimental section, of 30 MPa or more, more preferably 30 to 70 MPa or 35 to 60 MPa. In addition, the present invention is able to provide a monolayer film preferably having a Tensile Strength (TS) in traverse direction (TD), determined on a 50 μm cast film as described in the experimental section, of 25 MPa or more, more preferably 25 to 65 MPa or 30 to 55 MPa. In this case, the present invention is able to achieve favorable toughness properties and can thus be used in applications requiring a certain toughness behavior.

Specifically, the present invention is able to provide a monolayer film preferably having a normalized energy to peak force, determined on a 50 μm cast film as described in the experimental section, in the range of 30 to 55 J/mm, more preferably 40 to 50 J/mm. In this case, the present invention is able to achieve impact properties and can thus be used in applications requiring a certain impact behavior.

Needless to say that each of the above described properties of the monolayer film (e.g. SIT, sealing window, haze, TM MD, TM TD, TS MD, TS TD, normalized energy to peak force etc.) as described herein may preferably be individually adjusted into a preferred or more preferred range, while it is even more preferred that two or more, most preferably all, of the above properties are adjusted into preferred and/or even more preferred ranges in combination. This principle generally applies throughout the entire application to other mentioned properties in connection with (preferred) quantifications.

Surprisingly, the present inventors found out that with the polypropylene-based composition (PC) essentially combining the later described single site catalysed ethylene-propylene-1-butene terpolymer base resin (SSC234) and the later described ethylene-based elastomer, the envisaged film properties can be achieved even at a low content of the elastomerid modifier (ethylene-based elastomer), i.e. a content of e.g. 7.0 to 15.0 wt.-%, such as exemplary 10.0±2.0 wt.-%, of the ethylene-based elastomer based on the total weight of the PC. That means that it is unexpectedly possible to achieve the desired film properties by using a tailed combination of base resin and elastomeric modifier with the latter being required at a low amount only. As shown in the exemplary section, utilizing only 10 wt.-% of ethylene-based elastomer with SSC234 terpolymer of an optimized polymer design is capable in reducing the SIT to <100°C.

The monolayer film can have any form so that the filmy may be non-oriented or oriented and can be obtained by any process, like cast film technology or extrusion blown film technology. The thickness of the monolayer film is not particularly limited and the monolayer film may generally have a thickness in the range of 1 to 100 μm, such as 2.5 to 80 μm.

Thus, the monolayer film can be a film produced by blown film technology, such as a water or air quench blown film. Blow film technology applying water or air quenching is known to those skilled in the art and a more detailed description can be found in EP 3 064 548 A1 and "Polypropylene Handbook", edited by Edward P. Moore, Jr., Hanser Publishers, 1996.

Further, the monolayer film can be a film produced by cast film technology, such as a cast film, which is optionally oriented like being biaxially oriented. Cast film technology optionally applying orientation technology is known to those skilled in the art and a more detailed description can be found in EP 3 064 548 A1. Preferably, the monolayer film of the

present invention is a cast film.

Thus, the monolayer films according to the present invention are especially suitable as sealing layer, as they have a low SIT and a broad sealing window, beneficial optical properties and good mechanical properties. The monolayer film may e.g. be a packaging film for consumer goods or medical packaging, without limitation.

**Single site catalysed ethylene-propylene-1-butene terpolymer base resin (SSC234)**

The PC constituting the monolayer of the present invention is characterized by essentially comprising a single site catalysed ethylene-propylene-1-butene terpolymer base resin (SSC234) having

- an ethylene (C2) content, according to quantitative $^{13}$C-NMR spectroscopy analysis, in the range of 0.5 to 2.5 wt.-% with respect to the total weight of the SSC234;
- a 1-butene (C4) content, according to quantitative $^{13}$C-NMR spectroscopy analysis, in the range of 5.5 to 10.0 wt.-% with respect to the total weight of the SSC234;
- a melt flow rate $MFR_2$, according to ISO 1133 at 230°C and 2.16 kg load, in the range of 3.00 to 35.0 g/10min;
- a xylene cold solubles (XCS) content, according to ISO 16152 at 25°C, in the range of 0.1 to 4.5 wt.-% with respect to the total weight of the SSC234;
- a melting temperature ($T_m$), according to DSC as described in the experimental section, in the range of 120.0 to 140.0°C;
- a crystallization temperature ($T_c$), according to DSC as described in the experimental section, in the range of 80.0 to 115.0°C.

By means of combining such SSC234 terpolymer having optimized polymer design and the later described ethylene-based elastomer, the envisaged film properties can be achieved. That is, it is unexpectedly possible to achieve the desired film properties by using a tailed combination of said base resin and elastomeric modifier which is only required at a low amount.

It is to be noted that the "terpolymer" according to the present invention denotes a polymer made of the monomers ethylene, propylene and 1-butene, wherein these monomers can be found in the polymer chain. The weight-content of units originating from these monomers adds up to 100 wt.-%. Pseudo terpolymers being made from mixtures of two copolymers do not subsume under the term "terpolymer" according to the present invention in line with conventional nomenclature. Pseudo terpolymers can be recognized by coupled TREF-IR, coupled TREF-NMR or similar methods. As a matter of definition, a terpolymer according to the present invention is not a mixture of two copolymers.

There exists a crucial difference in the chain-microstructure between polypropylene produced by a single site catalyst such as a metallocene catalyst and a Ziegler-Natta catalyst. The chain regularity of metallocene-based polypropylene is reduced by stereo- and regio-defects, whereas the chain regularity of Ziegler-Natta based polypropylenes is only reduced by stereo defects. It is essential that the present terpolymer base resin (SSC234) is obtained in the presence of a single site polymerization catalyst, preferably a specific metallocene-type catalyst, which is preferably supported.

In that the terpolymer base resin (SSC234) is produced by using specifically a single site catalyst advantageously applying a specific supported metallocene-type catalyst, more preferably applying a two-stage polymerization process, the present invention can provide a SSC234 meeting specific requirements in terms of C2 content, C4 content, $MFR_2$, XCS content, $T_m$, and $T_c$ as described above.

Preferably, the SSC234 has an ethylene (C2) content, according to quantitative $^{13}$C-NMR spectroscopy analysis, in the range of 0.6 to 2.0 wt.-%, more preferably 0.7 to 1.5 wt.-%, with respect to the total weight of the SSC234. In this case, the effects of the present invention are more pronounced and/or their achievement is facilitated.

Preferably, the SSC234 has a 1-butene (C4) content, according to quantitative $^{13}$C-NMR spectroscopy analysis, in the range of 6.0 to 9.0 wt.-%, more preferably 6.5 to 8.5 wt.-%, with respect to the total weight of the SSC234. In this case, the effects of the present invention are more pronounced and/or their achievement is facilitated.

Preferably, the SSC234 has a total content of ethylene and 1-butene comonomers, with respect to the total weight of the SSC234, in the range of 7.0 to 11.0 wt.-%, more preferably 7.5 to 10.0 wt.-%. In this case, the effects of the present invention are more pronounced and/or their achievement is facilitated.

Preferably, the SSC234 has a melt flow rate $MFR_2$, according to ISO 1133 at 230°C and 2.16 kg load, in the range of 3.00 to 20.0 g/10min, more preferably 3.50 to 12.50 g/10min. In this case, the effects of the present invention are more pronounced and/or their achievement is facilitated.

Preferably, the SSC234 has a xylene cold solubles (XCS) content, according to ISO 16152 at 25°C, in the range of 0.1 to 3.5 wt.-%, more preferably 0.2 to 3.0 wt.-%. In this case, the effects of the present invention are more pronounced and/or their achievement is facilitated.

Preferably, the SSC234 has a melting temperature $T_m$, according to DSC as described in the experimental

section, in the range of 122.0 to 135.0°C, more preferably 123.0 to 130.0°C. In this case, the effects of the present invention are more pronounced and/or their achievement is facilitated especially in providing a broad sealing window.

Preferably, the SSC234 has a crystallization temperature ($T_c$), according to DSC as described in the experimental section, in the range of 82.0 to 110.0°C, more preferably 85.0 to 105.0°C. In this case, the effects of the present invention are more pronounced and/or their achievement is facilitated.

Preferably, the SSC234 has a ratio of the content of 1-butene comonomer to the content of ethylene comonomer (wt.-% C4/wt.-% C2) in the range of 4.0 to 12.5, preferably 6.0 to 10.0. In this case, the effects of the present invention are more pronounced and/or their achievement is facilitated.

Preferably, the SSC234 comprises at least, or consists of, two polymer fractions (SSC234-1) and (SSC234-2). In this case, the fraction SSC234-1 is preferably present in an amount of 55.0 to 80.0 wt.-%, more preferably 60.0 to 78.0 wt.-% and most preferably 65.0 to 75.0 wt.-%, based on the total weight of the SSC234, and the fraction SSC234-2 is preferably present in an amount of 20.0 to 45.0 wt.-%, more preferably 22.0 to 40.0 wt.-% and most preferably 25.0 to 35.0 wt.-%, based on the total weight of the SSC234.

In case the SSC234 comprises at least, or consists of, two polymer fractions (SSC234-1) and (SSC234-2), the fraction SSC234-1 preferably has an ethylene content, based on the total weight of the fraction SSC234-1, in the range of 0.2 to 2.0 wt.-%, more preferably 0.4 to 1.8 wt.-% and most preferably 0.5 to 1.2 wt.-%, and the fraction SSC234-2 preferably has an ethylene content, based on the total weight of the fraction SSC234-2, in the range of 1.0 to 3.5 wt.-%, more preferably 1.2 to 3.0 wt.-% and most preferably 1.3 to 2.0 wt.-%, wherein the ethylene content of fraction SSC234-1 is preferably lower than the ethylene content of fraction SSC234-2. Further, the fraction SSC234-1 preferably has an 1-butene content, based on the total weight of the fraction SSC234-1, in the range of 3.5 to 10.0 wt.-%, more preferably 4.2 to 9.0 wt.-% and most preferably 4.5 to 8.5 wt.-%, and the fraction SSC234-2 preferably has an 1-butene content, based on the total weight of the fraction SSC234-2, in the range of 5.5 to 15.0 wt.-%, more preferably 6.5 to 14.0 wt.-% and most preferably 7.0 to 13.0 wt.-%, wherein the 1-butene content of fraction SSC234-1 is preferably lower than the 1-butene content of fraction SSC234-2. In this case, the effects of the present invention are more pronounced and/or their achievement is facilitated due to a suitable compatibility with the ethylene-based elastomer.

The general principle applies that each of the above described properties of the SSC234 (e.g. C2 content, C4 content, total content of C2 and D4 and C4/C2 ratio, $MFR_2$, XCS content, $T_m$, and $T_c$, two polymer fractions and their contents and comonomer contents etc.) as described herein may preferably be individually adjusted into a preferred or more preferred range, while it is even more preferred that two or more, most preferably all, of the above properties are adjusted into preferred and/or even more preferred ranges in combination.

The terpolymer base resin (SSC234) may comprise one or more additives as mentioned above, thereby contributing to a content thereof in the PCC as defined above. In this case, a total amount of additives in the SSC234 is preferably in the range of 0.01 to 5.0 wt.-%, more preferably in the range of 0.05 to 3.0 wt.-% based on the total weight of the SSC234.

The single site catalysed ethylene-propylene-1-butene terpolymer base resin (SSC234) can be produced by any applicable polymerization method as long as the essential characteristics are attained. Polymerization processes which are suitable for producing the terpolymer base resin generally comprises one or two polymerization stages and each stage can be carried out in solution, slurry, fluidized bed, bulk or gas phase. The term "polymerization stage" or "polymerization reactor" indicates that the main polymerization takes place. Thus in case the process consists of one or two polymerization reactors/stages, this definition includes the option that the overall system comprises for instance a pre-polymerization step in a pre-polymerization reactor/stage. The term "consist of" is only a closing formulation in view of the main polymerization reactors/stages.

However, the SSC234 is preferably produced in a two-stage polymerization process, more preferably comprising a slurry reactor (e.g. loop reactor or first reactor R1), wherein the slurry (loop) reactor is connected in series to a gas phase reactor (GPR or second reactor R2), wherein the polymer fraction SSC234-1 is produced in the slurry (loop) reactor and the polymer fraction SSC234-2 is produced in GPR in the presence of the SSC234-1 to produce bimodal SSC234.

Such a process is in general described inter alia in WO 2016/198273 A1, WO2020/239603 A1, WO 2021/009189 A1, WO 2021/009190 A1, WO 2021/009191 A1 and WO 2021/009192 A1 and details of how to prepare single site (metallocene) catalysed bi- and multimodal polymers can be found in these references. A suitable and preferred process is the Borstar® process.

The terpolymer base resin (SSC234) in its preferred embodiment comprising two fractions (SSC234-1) and (SSC234-2) may be produced in a process comprising the following steps:

a) polymerizing in a first reactor (R1) propylene, ethylene and 1-butene, obtaining polymer fraction (SSC234-1),
b) transferring said polymer fraction (SSC234-1) and unreacted comonomers of the first reactor in a second reactor (R2),
c) feeding to said second reactor (R2) propylene, ethylene and 1-butene,
d) polymerizing in said second reactor (R2) and in the presence of said polymer fraction (SSC234-1) propylene,

ethylene and 1-butene to obtain polymer fraction (SSC234-2) as an in-reactor blend with SSC234-1 and hence the final single site catalysed ethylene-propylene-1-butene terpolymer base resin (SSC234), wherein the polymerization takes place in the presence of a single site catalyst, such as preferably a metallocene catalyst system as described in the following.

Conditions for operating a slurry reactor (e.g. loop reactor) and a GPR and how to adjust and fine-tune final polymer properties are known to the skilled person or can be determined by orientating experimentation. Preferred operation conditions in the slurry reactor may be as follows:

- temperature within the range of 50 to 90°C, more preferably 55 to 85°C, most preferably 60 to 80°C, e.g. 65±5°C,
- pressure within the range of 30 to 75 bar, more preferably 40 to 70 bar, most preferably 45 to 60 par, e.g. 53±5 bar,
- hydrogen can be added for controlling the molar mass in a manner known per se.

Preferred operation conditions in the GPR may be as follows:

- temperature within the range of 50 to 130°C, more preferably 60 to 100°C, most preferably 70 to 90°C, e.g. 80±5°C,
- pressure within the range of 5 to 45 bar, more preferably 15 to 40 bar, e.g. 25±5 bar,
- hydrogen can be added for controlling the molar mass in a manner known per se.

The SSC234 is thus preferably bimodal by being made in a two-stage polymerization process applying a slurry (loop or R1) - gas phase reactor (GPR or R2) cascade, such that the SSC234-1 is made in the R1 (slurry reactor) and the SSC234-2 is made in the R2 (GPR).

Such polymerization steps may preferably be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt.-%) of the first component (SSC234-1). It is understood that the amount of polymer produced in the prepolymerization may be within 1 to 5 wt.-% in respect to the final SSC234.

The SSC234 having the above properties can suitable and preferably be produced in the presence of a single site metallocene complex of formula (I):

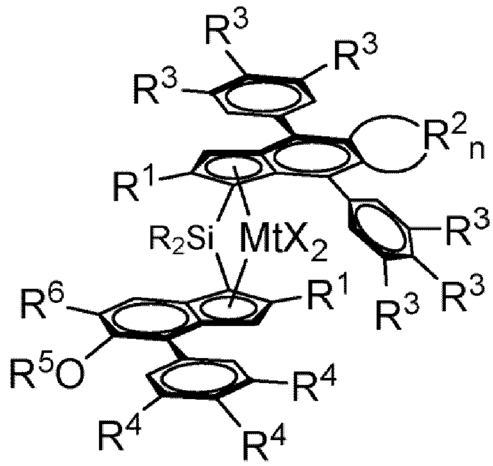

Formula (I)

wherein

Mt is Hf or Zr, preferably Zr;
each X is a sigma-ligand, preferably a chlorine, a benzyl or a methyl group,
each $R^1$ independently is the same or can be different and is a $CH_2$-$R^7$ group, with $R^7$ being H, a linear or branched $C_{1-6}$ alkyl group, an $C_{3-8}$ cycloalkyl group, or an $C_{6-10}$ aryl group,
each $R^2$ is independently a -CH=, -CY=, -$CH_2$-, -CHY- or -$CY_2$- group, wherein Y is a $C_{1-10}$ hydrocarbyl group and n is 2-6,
each $R^3$ and $R^4$ is independently the same or can be different and is hydrogen, a linear or branched $C_{1-6}$-alkyl group,

an OZ group, wherein Z is a $C_{1-4}$ hydrocarbyl group, a C7-20 arylalkyl, a C7-20 alkylaryl group or a C6-20 aryl group, wherein at least one $R^3$ per phenyl group and at least one $R^4$ is not hydrogen, and optionally two adjacent $R^3$ or $R^4$ groups can be part of a ring including the phenyl carbons to which they are bonded,
$R^5$ is a linear or branched $C_{1-6}$ alkyl group, $C_{7-20}$ arylalkyl, $C_{7-20}$ alkylaryl group or $C_{6-20}$ aryl group,
$R^6$ is a $C(R^8)_3$ group, with $R^8$ being a linear or branched $C_{1-6}$ alkyl group,
each R is independently a $C_{1-20}$ hydrocarbyl, $C_{6-20}$ aryl, $C_{7-20}$ arylalkyl or $C_{7-20}$ alkylaryl.

More preferably, the metallocene complex of formula (I) is a complex with the formula (1a):

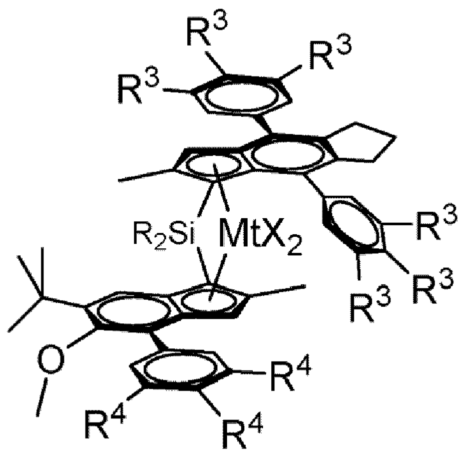

(Ia)

wherein each $R^3$ and $R^4$ is independently the same or can be different and is hydrogen or a linear or branched $C_{1-6}$ alkyl group, wherein at least one $R^3$ per phenyl group and at least one $R^4$ is not hydrogen. R is a $C_{1-10}$ hydrocarbyl group, preferably a $C_{1-4}$ hydrocarbyl group and more preferably a methyl group and X independently is a hydrogen atom, a halogen atom, a $C_{1-6}$ alkoxy group, a $C_{1-6}$ alkyl group, a phenyl group or benzyl group. Most preferably, X is chlorine, a benzyl group or a methyl group. Preferably, both X groups are the same. The most preferred options are two chlorines, two methyl groups or two benzyl groups, especially two chlorines.

Even more preferably, the metallocene complex used in the present invention is rac-anti-dimethylsilanediyl[2-methyl-4,8-bis-(4'-tert-butylphenyl)-1,5,6,7-tetrahydro-s-indacen-1-yl][2-methyl-4-(3',5'-dimethylphenyl)-5-methoxy-6-tert-butylinden-1-yl] zirconium dichloride, or rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-*tert*-butylinden-1-yl] zirconium dichloride, or rac-anti-dimethylsilanediyl[2-methyl-4,8-bis-(3',5'-dimethylphenyl)-1,5,6,7-tetrahydro-s-indacen-1-yl][2-methyl-4-(3',5'-di-tert-butylphenyl)-5-methoxy-6-tert-butylinden-1-yl] zirconium dichloride, or their corresponding zirconium dimethyl analogues, and wherein the metallocene complex is most preferably rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-*tert*-butylinden-1-yl] zirconium dichloride.

Further, the SSC234 is preferably produced in the presence of the (above) single site metallocene complex and one or more co-catalysts, preferably including at least an aluminoxane, which is preferably methylaluminoxane (MAO), more preferably a combination of an alumoxane with a boron-based cocatalyst, most preferably MAO and trityl-tetrakis(pentafluorophenyl) borate.

The catalyst in the present invention can be used in supported or unsupported form, but is preferably used in supported form. The support material used is preferably an inorganic material, such as silica, alumina or zirconia or a mixed oxide such as silica-alumina, in particular silica, alumina or silica-alumina. The use of a silica support is more preferred. The person skilled in the art is aware of the procedures required to support a metallocene catalyst.

More details about how to synthesize the above preferred single site metallocene complex, about suitable co-catalysts and about suitable supports can be found e.g. in WO2019/179959 A1 and WO2020/239603 A1, which respective contents are herein included by way of reference.

**Ethylene-based elastomer**

The PC constituting the monolayer of the present invention is characterized by essentially comprising an ethylene-based elastomer having a density, according to ISO1183-1, in the range of 850.0 to 910.0 kg/m$^3$; and a melt flow rate $MFR_2$, according to ISO 1133 at 190°C and 2.16 kg load, in the range of 0.10 to 80.0 g/10min.

By means of combining such ethylene-based elastomer with the above described SSC234 terpolymer base resin

having optimized polymer design, the envisaged film properties can be achieved. That is, it is unexpectedly possible to achieve the desired film properties by using only a low amount of the ethylene-based elastomer as an elastomeric modifier.

Preferably, the ethylene-based elastomer has a density, according to ISO1183-1, in the range of 850.0 to 900.0 kg/$m^3$, more preferably 855.0 to 890.0 kg/$m^3$. In this case, the effects of the present invention are more pronounced and/or their achievement is facilitated.

Preferably, the ethylene-based elastomer has a melt flow rate $MFR_2$, according to ISO 1133 at 190°C and 2.16 kg load, in the range of 0.20 to 50.0 g/10min, more preferably 0.50 to 20.0 g/10min. In this case, the effects of the present invention are more pronounced and/or their achievement is facilitated.

Preferably, the ethylene-based elastomer has a melting temperature $T_m$, according to DSC as described in the experimental section, in the range of 15.0 to 60.0°C, more preferably 20.0 to 50.0°C. In this case, the effects of the present invention are more pronounced and/or their achievement is facilitated.

Preferably, the ethylene-based elastomer is a copolymer of ethylene and a C4-C10 $\alpha$-olefin, wherein suitable C4-C10 $\alpha$-olefins are 1-butene, 1-hexene and 1-octene, preferably 1-butene and 1-octene, more preferably1-butene. Thus, particularly preferably the ethylene-based elastomer is an ethylene-1-butene copolymer. The ethylene-1-butene copolymer preferably has a 1-butene content, based on the total weight of the ethylene-1-butene copolymer, in the range of 20 to 40 wt.-% according to quantitative $^{13}$C-NMR spectroscopy analysis. In this case, the effects of the present invention are more pronounced and/or their achievement is facilitated due to a suitable compatibility with the SSC234.

The ethylene-based elastomer can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known in the art.

Preferably, the ethylene-based elastomer, preferably an ethylene-1-butene copolymer, is prepared by a one stage or two stage solution polymerization process, especially by high temperature solution polymerization process at temperatures higher than 100°C.

Such process is essentially based on polymerizing the monomer and a suitable comonomer, preferably 1-butene, in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process. Preferably, the solution polymerization process is a high temperature solution polymerization process, using a polymerization temperature of higher than 100°C. Preferably, the polymerization temperature is at least 110°, more preferably at least 150°C. The polymerization temperature can be up to 250°C. The pressure in such a solution polymerization process is preferably in a range of 10 to 100 bar, preferably 15 to 100 bar and more preferably 20 to 100 bar.

The liquid hydrocarbon solvent used is preferably a C5-12-hydrocarbon which may be unsubstituted or substituted by C1-4 alkyl group such as pentane, methyl pentane, hexane, heptane, octane, cyclohexane, methylcyclohexane and hydrogenated naphtha. More preferably unsubstituted C6-10-hydrocarbon solvents are used. A known solution technology suitable for the process according to the invention is the COMPACT technology.

It is also possible to use commercially available ethylene-based elastomers, preferably ethylene-1-butene copolymer. Examples of an ethylene-1-butene copolymer elastomer include Engage™ produced by The Dow Chemical Co. Ltd., such as Engage™ 7467.

**Use of polypropylene-based composition (PC)**

All preferred aspects and embodiments as described above shall also hold for the use according to the present invention.

The present invention further relates to the use of a polypropylene-based composition (PC) comprising, based on the total weight of the PC,

75.0 to 95.0 wt.-% of a single site catalysed ethylene-propylene-1-butene terpolymer base resin (SSC234) having

- an ethylene (C2) content, according to quantitative $^{13}$C-NMR spectroscopy analysis, in the range of 0.5 to 2.5 wt.-% with respect to the total weight of the SSC234;
- a 1-butene (C4) content, according to quantitative $^{13}$C-NMR spectroscopy analysis, in the range of 5.5 to 10.0 wt.-% with respect to the total weight of the SSC234;
- a melt flow rate $MFR_2$, according to ISO 1133 at 230°C and 2.16 kg load, in the range of 3.00 to 35.0 g/10min;
- a xylene cold solubles (XCS) content, according to ISO 16152 at 25°C, in the range of 0.1 to 4.5 wt.-% with respect to the total weight of the SSC234;
- a melting temperature ($T_m$), according to DSC as described in the experimental section, in the range of 120.0 to 140.0°C;

- a crystallization temperature ($T_c$), according to DSC as described in the experimental section, in the range of 80.0 to 115.0°C;

5.0 to 25.0 wt.-% of an ethylene-based elastomer having

- a density, according to ISO1183-1, in the range of 850.0 to 910.0 kg/$m^3$;
- a melt flow rate $MFR_2$, according to ISO 1133 at 190°C and 2.16 kg load, in the range of 0.10 to 80.0 g/10min

to produce a monolayer film or a layer of a multilayer film.

The polypropylene-based composition (PC), the single site catalysed ethylenepropylene-1-butene terpolymer base resin (SSC234) and the ethylene-based elastomer according to the use of the present invention preferably refer to the PC, SSC234 and the ethylene-based elastomer as described in detail above, so that the above description applies in an analogous manner making a detailed description dispensable at that point.

Further, in case the polypropylene-based composition (PC) used to produce a monolayer film, the above description regarding the monolayer film according to the present invention applies in an analogous manner making a detailed description dispensable at that point.

The polypropylene-based composition (PC) may also be used to produce a layer of a multilayer film, especially a sealing layer in a multilayer film construction, as is has a low SIT and a broad sealing window as well as beneficial optical properties.

When the polypropylene-based composition (PC) is used to produce a layer of a multilayer film, the film can be produced by any means known in the art., preferably by means of cast film co-extrusion. A multi-layer film construction comprising at least one layer made using the PC is preferably produced by multi-layer co-extrusion followed by film casting or film blowing. In this case, at least one of the outermost layers of said multilayer film construction serving as sealing layer(s) is made using the inventive PC as defined above. The multilayer film construction may preferably have a thickness in the range of 30 to 500 μm, more preferably in the range of 50 to 400 μm, like in the range of 60 to 300 μm. The sealing layer(s) comprising the inventive PC may preferably have a thickness in the range of 3 to 50 μm, more preferably in the range of 5 to 30 μm, like in the range of 8 to 25 μm.

The film may e.g. be a packaging film for consumer goods or medical packaging, without limitation.

The invention will now be described with reference to the following non-limiting examples.

## Example

### 1. Measuring methods

The following definitions of terms and determination methods apply for the above general description of the invention as well as to the below examples unless otherwise defined.

### Melt flow rate (MFR)

The melt flow rate (MFR) was determined according to ISO 1133 and is indicated in g/10 min. The MFR was determined at 230°C for polypropylene and polypropylene compositions and at 190°C for polyethylene and polyethylene compositions. The MFR is determined at a loading of 2.16 kg. If the MFR of a polymer component, e.g. second component SSC234-2, cannot be measured, because it cannot be isolated from the mixture of the first fraction SSC234-1 and the second component SSC234-2, then it can be calculated as follows:
Calculation of $MFR_2$ of component SSC234-2:

$$logA = x \cdot logB + (1 - x) \cdot logC$$

$$C = 10^\wedge \frac{(logA - x.logB)}{(1-x)}$$

For component SSC234-2:

B = $MFR_2$ of first fraction SSC234-1
C = $MFR_2$ of second fraction SSC234-2
A = final $MFR_2$ (mixture) of polymer (=SSC234)

X = weight fraction of the first fraction SSC234-1

**Xylene cold soluble content (XCS, wt.-%)**

The amount of the polymer soluble in xylene was determined at 25°C according to ISO 16152:2022. Calculation of the XCS of a polymer fraction (e.g. SSC234-2), e.g. if it cannot be measured, because it cannot be isolated from the mixture, can be done in line with the principle and systematic of the formulas in WO 2017/148970 A1 (see section "calculations").

**Density**

The density of a polymer or polymer composition was measured according to ISO 1183-1 on compression-molded specimen prepared according to ISO 17855-2 and is given in kg/m$^3$.

**DSC analysis, melting temperature ($T_m$), melting enthalpy ($H_m$), crystallization temperature ($T_c$) and crystallization enthalpy ($H_c$)**

Melting peak temperatures ($T_m$), melting enthalpies ($H_m$), crystallization peak temperature ($T_c$) and crystallization enthalpy ($H_c$) were measured with a TA Instrument Q200 differential scanning calorimetry (DSC) on 5 to 7 mg samples. DSC was run according to ISO 11357-3 in a heat / cool / heat cycle with a scan rate of 10°C/min in the temperature range of -30 to +225°C. Crystallization peak temperature ($T_c$) and crystallization enthalpy ($H_c$) were determined from the cooling step, while melting peak temperature(s) ($T_m$) and melting enthalpy(ies) ($H_m$) were determined from the second heating step.

**Description of microstructure quantification by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05, griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm. Characteristic signals corresponding to the incorporation of 1-butene were observed {brandolini01} and the comonomer content quantified.

The amount of isolated 1-butene incorporated in PBP sequences was quantified using the integral of the αB2 sites at 43.6 ppm accounting for the number of reporting sites per comonomer:

$$B = I_{\alpha B2} / 2$$

The amount of consecutively incorporated 1-butene in PBBP sequences was quantified using the integral of the ααB2B2 site at 40.5 ppm accounting for the number of reporting sites per comonomer:

$$BB = 2 * I_{\alpha\alpha B2B2}$$

In presence of BB the value of B must be corrected for the influence of the αB2 sites resulting from BB:

$$B = (I_{\alpha B2} / 2) - BB/2$$

The total 1-butene content was calculated based on the sum of isolated and consecutively incorporated 1-butene:

$$B_{total} = B + BB$$

Characteristic signals corresponding to the incorporation of ethylene were observed {brandolini01} and the comonomer content quantified.

The amount of isolated ethylene incorporated in PEP sequences was quantified using the integral of the $S\beta\beta$ sites at 24.3 ppm accounting for the number of reporting sites per comonomer:

$$E = I_{S\beta\beta}$$

If characteristic signals corresponding to consecutive incorporation of ethylene in PEE sequence was observed the $S\beta\delta$ site at 27.0 ppm was used for quantification:

$$EE = I_{S\beta\delta}$$

Characteristic signals corresponding to regio defects were observed {resconi00}. The presence of isolated 2,1-erythro regio defects was indicated by the presence of the two methyl sites at 17.7 and 17.2 ppm, by the methylene site at 42.4 ppm and confirmed by other characteristic sites. The presence of 2,1 regio defect adjacent an ethylene unit was indicated by the two inequivalent $S\alpha\beta$ signals at 34.8 ppm and 34.4 ppm respectively and the Tyy at 33.7 ppm.

The amount of isolated 2,1-erythro regio defects ($P_{21e\ isolated}$) was quantified using the integral of the methylene site at 42.4 ppm ($I_{e9}$):

$$P_{21e\ isolated} = I_{e9}$$

If present the amount of 2,1 regio defect adjacent to ethylene ($P_{E21}$) was quantified using the methine site at 33.7 ppm ($I_{\tau\gamma\gamma}$):

$$P_{E21} = I_{T\gamma\gamma}$$

The total ethylene content was then calculated based on the sum of ethylene from isolated, consecutively incorporated and adjacent to 2,1 regio defects:

$$E_{total} = E + EE + P_{E21}$$

The amount of propene was quantified based on the $S\alpha\alpha$ methylene sites at 46.7 ppm including all additional propene units not covered by $S\alpha\alpha$ e.g. the factor $3*P_{21e\ isolated}$ accounts for the three missing propene units from isolated 2,1-erythro regio defects:

$$P_{total} = I_{S\alpha\alpha} + 3*P_{21e\ isolated} + B + 0.5*BB + E + 0.5*EE + 2*P_{E21}$$

The total mole fraction of 1-butene and ethylene in the polymer was then calculated as:

$$fB = B_{total} / ( E_{total} + P_{total} + B_{total} )$$

$$fE = E_{total} / ( E_{total} + P_{total} + B_{total} )$$

The mole percent comonomer incorporation was calculated from the mole fractions:

$$B\ [mol\%] = 100 * fB$$

$$E\ [mol\%] = 100 * fE$$

The weight percent comonomer incorporation was calculated from the mole fractions:

B [wt%] = 100 * ( fB * 56.11 ) / ( fE * 28.05) + (fB * 56.11) + ((1-(fE+fB)) * 42.08) )

E [wt%] = 100 * ( fE * 28.05 ) / ( fE * 28.05) + (fB * 56.11) + ((1-(fE+fB)) * 42.08) )

The mole percent of isolated 2,1-erythro regio defects was quantified with respect to all propene:

$$[21e]\ mol\% = 100 * P_{21e\ isolated} / P_{total}$$

The mole percent of 2,1 regio defects adjacent to ethylene was quantified with respect to all propene:

$$[E21]\ mol\% = 100 * P_{E21} / P_{total}$$

The total amount of 2,1 defects was quantified as following:

$$[21]\ mol\% = [21e] + [E21]$$

Characteristic signals corresponding to other types of regio defects (2,1-threo, 3,1 insertion) were not observed {resconi00}.

klimke06: Klimke, K., Parkinson, M., Piel, C., Kaminsky, W., Spiess, H.W., Wilhelm, M., Macromol. Chem. Phys. 2006;207:382.
parkinson07: Parkinson, M., Klimke, K., Spiess, H.W., Wilhelm, M., Macromol. Chem. Phys. 2007;208:2128.
pollard04: Pollard, M., Klimke, K., Graf, R., Spiess, H.W., Wilhelm, M., Sperber, O., Piel, C., Kaminsky, W., Macromolecules 2004;37:813.
filip05: Filip, X., Tripon, C., Filip, C., J. Mag. Resn. 2005, 176, 239.
griffin07: Griffin, J.M., Tripon, C., Samoson, A., Filip, C., and Brown, S.P., Mag. Res. in Chem. 2007 45, S1, S198.
castignolles09: Castignolles, P., Graf, R., Parkinson, M., Wilhelm, M., Gaborieau, M., Polymer 50 (2009) 2373.
resconi00: Resconi, L., Cavallo, L., Fait, A., Piemontesi, F., Chem. Rev. 2000, 100, 1253.
brandolini01: A.J. Brandolini, D.D. Hills, "NMR spectra of polymers and polymer additives", Marcel Deker Inc., 2000.

Calculation of the comonomer (e.g. ethylene or butylene) content of a polymer fraction (e.g. SSC234-2), e.g. if it cannot be measured, because it cannot be isolated from the mixture, can be done in line with the principle and systematic of the formulas in WO 2017/148970 A1 (see section "calculations").

**Sealing Properties**

This method is used to determine the sealing window (sealing temperature range) of 50 microns monolayer cast films produced as indicated under 'Film sample preparation'. The procedure is similar to hot tack measurement, but in contrast to hot tack the sealing range applies to the strength of the seal after it had cooled (delay time of 30 s).

Sealing range = (Seal initiation temperature until Seal end temperature)

The determined results give the user a quantitatively useful indication of the strength of the sealed films and show the temperature range for optimal sealing. The lower limit (Sealing Initiation Temperature - SIT) is the sealing temperature at which a sealing force of 5 N is achieved. The upper limit (Sealing End Temperature - SET) is identified, before the film burns through.

The temperature interval is set by default to 5°C, but can be reduced to 1°C when the curve shows a sharp increase or decrease in the force values in order to represent a better curve profile.

Deviating from ASTM F1921 - 12, the test parameters sealing pressure, sealing time, delay time and clamp separation rate are modified. The determination of the force/temperature curve is continued until thermal failure of the film. In addition to failure mode evaluations described in the standard, additional failure modes are used.

To characterize the material, the measured values sealing range start temperature (SIT), temperature at max. force (MAX) and sealing range end temperature (SET) are also determined.

<u>Standard conditions:</u>

Conditioning time: > 96 h
Sealing jaws dimension: 50×5 mm

Sealing jaws shape: flat
Sealing jaws coating: Niptef
Sealing temperature: ambient - 240°C
Sealing temperature interval: 5°C
Sealing time: 1 sec
Delay time: 30 sec
Sealing pressure: 0.67 $N/mm^2$ (PP)
Clamp separation rate: 42 mm/sec
Sealing initiation force: 5 N
Sample width: 25 mm

Results:

The output of this method is a sealing curve.

- Sealing initiation temperature [°C]
- Sealing end temperature [°C]
- Temperature at max. Force [°C]
- Max. Force [N]
- Rel. max. Force [N/cm]
- Energy to max. Force [mJ]
- Total Energy [mJ]
- Total Strain [%]
- Thickness [mm]
- Failure modes (Failure + Type of failure)

**Impact Resistance by the Free-Falling Dart Method**

Maximum force, deflection at maximum force, energy to maximum force, puncture deflection and puncture energy were determined in the instrumented puncture impact behaviour test according to ISO 7765-2. The films were 50 microns monolayer cast films produced as indicated under 'Film sample preparation'. The testing conditions used were: impact velocity of 4.4 m/s, with 20 mm diameter not lubricated striker, at 23±2°C. The specimens were clamped with a support ring of 40 mm diameter.

**Tensile properties of films (incl. modulus)**

This test method is used for determination of tensile properties of 50 microns monolayer cast films produced as indicated under 'Film sample preparation'. In addition to ISO 527-3 the modulus of elasticity (secant modulus between 0.05 % and 0.25 % elongation) is also determined.

A specimen is extended along its major axis for determination of tensile properties at constant testspeed (speed of crosshead) until the specimen fracture. During this procedure the load sustained by the specimen and the elongation, which is measured by the crosshead, are measured.

Standard conditions:

Conditioning time: > 96 h
Test temperature: 23 °C
Gripping distance: 100 mm
Gauge length: 100 mm
Secant modulus: 0.05% - 0.25%
Testspeed modulus: 1 mm/min
Testspeed: 200 mm/min

Results:

- Tensile modulus [MPa]
- Tensile stress at yield [MPa]
- Nominal tensile strain at yield [%]
- Maximum force [N]
- Tensile strength [MPa]
- Nominal tensile strain at tensile strength [%]
- Tensile stress at break [MPa]
- Nominal tensile strain at break [%]
- X% nominal tensile strain [%]
- Tensile stress at x% nominal tensile strain [MPa]

**Haze**

The haze was measured according to ASTM D1003-13 on 50 microns monolayer cast films produced as indicated under 'Film sample preparation'.

**Film sample preparation**

The film samples have been produced on a small-scale laboratory cast film line from company COLLIN Lab & Pilot Solutions GmbH.

The line consists of an extruder with a ø 30 mm screw with an L/D ration of 30. The extruder temperature has been set at 250°C, resulting in a melt temperature of 240°C. The extruder is followed by a flat-die with a width of 300 mm. The die has a flexible die lip with a die gap of 0.5 -1.5 mm. The line has been run at a constant throughput of 8 kg/h and a line speed of 10 m/min, resulting in a film thickness of 50 μm. The film was cooled with a chill-roll temperature of 15°C in combination with an air-knife.

**2. Experimental part**

**Catalyst**

Catalyst complex

The metallocene complex *rac-anti*-dimethylsilanediyl[2-methyl-4,8-bis(3',5'-dimethylphenyl)-1,5,6,7-tetrahydro-s-indacen-1-yl][2-methyl-4-(3',5'-dimethylphenyl)-5-methoxy-6-*tert*-butylinden-1-yl] zirconium dichloride has been used as described in WO 2020/239603 A1 (MC3).

Preparation of MAO-silica support

A steel reactor equipped with a mechanical stirrer and a filter net was flushed with nitrogen and the reactor temperature was set to 20°C. Next silica grade DM-L-303 from AGC Si-Tech Co, pre-calcined at 600°C (7.4 kg) was added from a feeding drum followed by careful pressuring and depressurising with nitrogen using manual valves. Then toluene (32.2 kg) was added. The mixture was stirred (40 rpm) for 15 min. Next 30 wt.-% solution of MAO in toluene (17.5 kg) from Lanxess was added via 12 mm line on the top of the reactor within 70 min. The reaction mixture was then heated up to 90°C and stirred at 90°C for additional two hours. The slurry was allowed to settle and the mother liquor was filtered off. The MAO treated silica support was washed twice with toluene (32.2 kg) at 90°C, following by settling and filtration. The reactor was cooled off to 60°C and the solid was washed with heptane (32.2 kg). Finally MAO treated SiOz was dried at 60°C for 2h under nitrogen flow 2 kg/h, pressure 0.3 barg and then for 5 hours under vacuum (-0.5 barg) with stirring at 5 rpm. MAO treated support was collected as a free-flowing white powder found to contain 12.7 wt.-% Al.

Single site catalyst system preparation

In a nitrogen filled glovebox, a solution of MAO 0.12 mL (30 wt.-% in toluene, AXION 1330 CA Lanxess) in dry toluene (1 mL) was added to an aliquot of the metallocene (17.6 mg, 19 μmol). The mixture was stirred for 60 minutes at room temperature. Next, trityl tetrakis(pentafluorophenyl) borate (18.0 mg, 20 μmol) was added to the mixture, and the mixture was stirred for another hour at room temperature. 1.0 g of MAO treated silica prepared as described above, was placed in a glass flask. A solution of metallocene, Borate and MAO in toluene was then slowly added to the support over the course of 5 minutes with gentle mixing. The resulting mixture was shaken well and allowed to stay overnight. The resulting cake was washed with 5 mL of toluene at room temperature, and then was dried in vacuum for 1 hour to yield 1.2 g of the catalyst as pink free flowing powder containing 11.3 wt.-% Al and 0.089 wt.-% Zr according to the ICP analysis.

**Polymerization of single site catalysed ethylene-propylene-1-butene terpolymer base resin (SSC234)**

The single site catalysed ethylene-propylene-1-butene terpolymer base resin (SSC234) according to the invention (SSC234-IE) and according to a reference (SSC234-RE) is each a bimodal copolymer which was produced in a Borstar® pilot plant with a 2-reactor set-up (loop-GPR) and a prepolymerization loop reactor by using the above catalyst added to the prepolymerization reactor and applying the polymerization conditions as given in Table 1 below.

| **Table 1:** Polymerization conditions | | SSC234-IE | SSC234-RE |
|---|---|---|---|
| **PREPOLY (P)** | | | |
| temperature | °C | 20 | 20 |
| H2 feed | g/h | 0.1 | 0.1 |
| C2 feed | kg/h | 0 | 0 |
| press. reactor | barg | 53 | 51 |
| **LOOP (L)** | | | |
| pressure | barg | 53 | 50 |
| temperature | °C | 65 | 68 |
| H2/C3 | mol/kmol | 0.35 | |
| C3 feed | (kg/h) | 185 | 182 |
| H2 feed P + L | (g/h) | 0.6 | 0.9 |
| C2 feed | (kg/h) | 2.3 | 2.3 |
| C4 feed | (kg/h) | 15.9 | 9.2 |
| Calc. H2/C3 ratio | mol/kmol | 0.08 | 0.12 |
| Feed H2/C3 | mol/kmol | 0.06 | 0.10 |
| Feed C2/C3 | mol/kmol | 18.7 | 18.60 |
| Feed C4/C3 | mol/kmol | 64.4 | 38.01 |
| split | wt.-% | 68 | 51 |
| MFR2 (SSC234-1) | g/10min | 3.1 | 5.6 |
| C2 (SSC234-1) | wt.-% | 0.7 | 0.6 |
| C4 (SSC234-1) | wt.-% | 6.1 | 4.1 |
| **GPR** | | - | |
| temperature | °C | 80 | 75 |
| pressure | barg | 25 | 25 |
| H2/C3 ratio | mol/kmol | 1.1 | 1.32 |
| H2/C2 ratio | mol/kmol | 14.0 | 13.82 |
| C2/C3 ratio | mol/kmol | 81.2 | 95.7 |
| C4/C3 ratio | mol/kmol | 59.4 | 35.5 |
| C2 feed | kg/h | 9.8 | 13.9 |
| split | wt.-% | 32 | 49 |
| C2 (SSC234-2) | wt.-% | 1.6 | 2.2 |
| C4 (SSC234-2) | wt.-% | 10.4 | 6.1 |
| MFR2 (SSC234-2) | g/10min | 7.4 | 6.7 |

The characteristics of the polymer powders SSC234-IE and SSC234-RE produced according to the above

procedure are given in Table 2 below. Further, the polymer powders SSC234-IE and SSC234-RE (99.75 wt.-%) were each compounded in a co-rotating twin-screw extruder Coperion ZSK 70 at 220°C with 0.05 wt.-% antioxidant, which is pentaerythrityl-tetrakis(3-(3',5'-di-tert-butyl-4-hydroxyphenyl)-propionate (Irganox1010 (FF) BASF; CAS 6683-19-8), 0.05 wt.-% antioxidant, which is tris (2,4-di-t-butylphenyl) phosphite (Irgafos 168 (FF) BASF; CAS 31570-04-4), 0.05 wt.-% acid scavenger, which is synthetic hydrotalcite ($Mg_{4.3}Al_2(OH)_{12.3}(CO_3)\cdot mH_2O$; CAS 11097-59-9) and 0.10 wt.-% antiblocking agent, which is synthetic amorphous silica (chemically prepared; CAS 7631-86-9), and pelletized. The polymer characteristics of the polymer pellets SSC234-IE and SSC234-RE are also given in Table 2 below.

| **Table 2:** Polymer characteristics | | SSC234-IE | SSC234-RE |
|---|---|---|---|
| **Powder** | | | |
| Total C2 | wt.-% | 1.0 | 1.4 |
| Total C4 | wt.-% | 7.5 | 5.1 |
| XCS | wt.-% | 2.5 | 1.9 |
| **Pellet** | | | |
| MFR2 | g/10min | 4.1 | 6.1 |
| $T_m$ | °C | 126.2 | 130.7 |
| $T_c$ | °C | 98.9 | 91.8 |

The polymer pellets of SSC234-IE and SSC234-RE (90 wt.-%) were each blended with 10 wt.-% elastomer (Engage™ 7467 by Dow Chemicals, which is an ethylene-1-butene copolymer with an $MFR_2$ (2.16 kg at 190°C) of 1.2 g/10 min, a density of 0.862 g/cm$^3$ and $T_m$ of 34.0°C) and extruded into 50 microns monolayer cast films on the Collin lab-scale unit (as indicated under above 'Film sample preparation'). The films were tested and their recipe and properties are summarized in Table 3 below. Incidentally, DMTA results in tension mode for both films confirmed that both systems are heterophasic and are similar to one another (data not shown).

| **Table 3:** Cast film properties | | **CE1** | **IE1** |
|---|---|---|---|
| **Recipe** | | | |
| SSC234-RE | wt.-% | 90 | - |
| SSC234-IE | wt.-% | - | 90 |
| Engage™ 7467 | wt.-% | 10 | 10 |
| | | | |
| **50 microns monolayer cast film** | | | |
| Sealing initiation temperature (SIT) | °C | 101 | 96 |
| Tensile modulus at 23°C - MD | MPa | 404.5 | 372.3 |
| Tensile strength at 23°C - MD | MPa | 41.21 | 42.24 |
| Tensile modulus at 23°C - TD | MPa | 370.8 | 342.8 |
| Tensile strength at 23°C - TD | MPa | 36.63 | 37.3 |
| Normalized energy to peak force | J/mm | 43.06 | 43.62 |
| Haze | % | 3.92 | 2.17 |

As can be seen from the above, with the suitable polymer design in combination with a low amount of ethylene based-elastomer according to the polymer composition of the present invention, it is unexpectedly possible to bring down the SIT value to lower than 100°C. At the same time, the mechanical properties are retained while haze is improved.

## Claims

1. Monolayer film made of a polypropylene-based composition (PC) comprising, based on the total weight of the PC,

    75.0 to 95.0 wt.-% of a single site catalysed ethylene-propylene-1-butene terpolymer base resin (SSC234) having

    - an ethylene (C2) content, according to quantitative $^{13}$C-NMR spectroscopy analysis, in the range of 0.5 to 2.5 wt.-% with respect to the total weight of the SSC234;
    - a 1-butene (C4) content, according to quantitative $^{13}$C-NMR spectroscopy analysis, in the range of 5.5 to 10.0 wt.-% with respect to the total weight of the SSC234;
    - a melt flow rate $MFR_2$, according to ISO 1133 at 230°C and 2.16 kg load, in the range of 3.00 to 35.0 g/10min;
    - a xylene cold solubles (XCS) content, according to ISO 16152 at 25°C, in the range of 0.1 to 4.5 wt.-% with respect to the total weight of the SSC234;
    - a melting temperature ($T_m$), according to DSC as described in the experimental section, in the range of 120.0 to 140.0°C;
    - a crystallization temperature ($T_c$), according to DSC as described in the experimental section, in the range of 80.0 to 115.0°C;

    5.0 to 25.0 wt.-% of an ethylene-based elastomer having

    - a density, according to ISO1183-1, in the range of 850.0 to 910.0 kg/m$^3$;
    - a melt flow rate $MFR_2$, according to ISO 1133 at 190°C and 2.16 kg load, in the range of 0.10 to 80.0 g/10min.

2. Monolayer film according to claim 1, wherein the SSC234 has a total content of ethylene and 1-butene comonomers, with respect to the total weight of the SSC234, in the range of 7.0 to 11.0 wt.-%, preferably 7.5 to 10.0 wt.-%, and/or wherein the SSC234 has a ratio of the content of 1-butene comonomer to the content of ethylene comonomer (wt.-% C4/wt.-% C2) in the range of 4.0 to 12.5, preferably 6.0 to 10.0.

3. Monolayer film according to claim 1 or 2, wherein the SSC234 has at least one, preferably two or more or all of

    - an ethylene (C2) content, according to quantitative $^{13}$C-NMR spectroscopy analysis, in the range of 0.6 to 2.0 wt.-%, preferably 0.7 to 1.5 wt.-%, with respect to the total weight of the SSC234;
    - a 1-butene (C4) content, according to quantitative $^{13}$C-NMR spectroscopy analysis, in the range of 6.0 to 9.0 wt.-%, preferably 6.5 to 8.5 wt.-%, with respect to the total weight of the SSC234;
    - a melt flow rate $MFR_2$, according to ISO 1133 at 230°C and 2.16 kg load, in the range of 3.00 to 20.0 g/10min, preferably 3.50 to 12.50 g/10min;
    - a xylene cold solubles (XCS) content, according to ISO 16152 at 25°C, in the range of 0.1 to 3.5 wt.-%, preferably 0.2 to 3.0 wt.-% with respect to the total weight of the SSC234;
    - a melting temperature ($T_m$), according to DSC as described in the experimental section, in the range of 122.0 to 135.0°C, preferably 123.0 to 130.0°C;
    - a crystallization temperature ($T_c$), according to DSC as described in the experimental section, in the range of 82.0 to 110.0°C, preferably 85.0 to 105.0°C.

4. Monolayer film according to any one of claims 1 to 3, wherein the SSC234 comprises, or consists of, two polymer fractions (SSC234-1) and (SSC234-2), wherein the fraction SSC234-1 is present in an amount of 55.0 to 80.0 wt.-%, preferably 60.0 to 78.0 wt.-% and more preferably 65.0 to 75.0 wt.-%, based on the total weight of the SSC234, and the fraction SSC234-2 is present in an amount of 20.0 to 45.0 wt.-%, preferably 22.0 to 40.0 wt.-% and more preferably 25.0 to 35.0 wt.-%, based on the total weight of the SSC234.

5. Monolayer film according to claim 4, wherein the fraction SSC234-1 has an ethylene content, based on the total weight of the fraction SSC234-1, in the range of 0.2 to 2.0 wt.-%, preferably 0.4 to 1.8 wt.-% and more preferably 0.5 to 1.2 wt.-%, and the fraction SSC234-2 has an ethylene content, based on the total weight of the fraction SSC234-2, in the range of 1.0 to 3.5 wt.-%, preferably 1.2 to 3.0 wt.-% and more preferably 1.3 to 2.0 wt.-%, wherein the ethylene content of fraction SSC234-1 is preferably lower than the ethylene content of fraction SSC234-2, and
wherein the fraction SSC234-1 has a 1-butene content, based on the total weight of the fraction SSC234-1, in the range of 3.5 to 10.0 wt.-%, preferably 4.2 to 9.0 wt.-% and more preferably 4.5 to 8.5 wt.-%, and the fraction SSC234-2 has a 1-butene content, based on the total weight of the fraction SSC234-2, in the range of 5.5 to 15.0 wt.-%, preferably 6.5 to 14.0 wt.-% and more preferably 7.0 to 13.0 wt.-%, wherein the 1-butene content of fraction SSC234-1 is

preferably lower than the 1-butene content of fraction SSC234-2.

**6.** Monolayer film according to any one of claims 1 to 5, wherein the polypropylene-based composition (PC) comprises, based on the total weight of the PC, 80.0 to 95.0 wt.-%, preferably 85.0 to 93.0 wt.-%, of the SSC234 and 5.0 to 20.0 wt.-%, preferably 7.0 to 15.0 wt.-% of the ethylene-based elastomer.

**7.** Monolayer film according to any one of claims 1 to 6, wherein the ethylene-based elastomer is an ethylene-1-butene copolymer having a1-butene content, based on the total weight of the ethylene-1-butene copolymer, in the range of 20 to 40 wt.-%.

**8.** Monolayer film according to any one of claims 1 to 7, wherein the ethylene-based elastomer has at least one, preferably two or more or all of

- a density, according to ISO1183-1, in the range of 850.0 to 900.0 kg/$m^3$, preferably 855.0 to 890.0 kg/$m^3$;
- a melt flow rate $MFR_2$, according to ISO 1133 at 190°C and 2.16 kg load, in the range of 0.20 to 50.0 g/10min, preferably 0.50 to 20.0 g/10min;
- a melting temperature $T_m$, according to DSC as described in the experimental section, in the range of 15.0 to 60.0°C, preferably 20.0 to 50.0°C.

**9.** Monolayer film according to any one of claims 1 to 8, wherein the single site catalysed ethylene-propylene-1-butene terpolymer base resin (SSC234) is produced in the presence of a single site metallocene complex of formula (Ia):

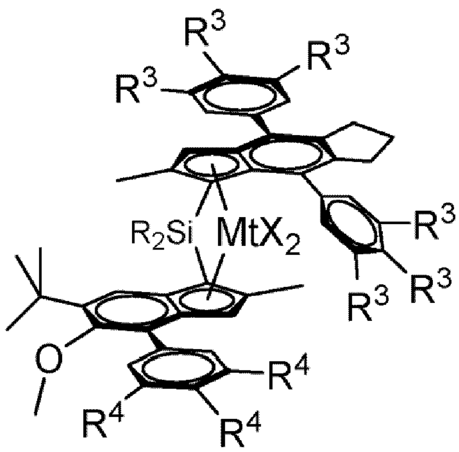

(Ia)

wherein each $R^3$ and $R^4$ is independently the same or can be different and is hydrogen or a linear or branched $C_{1-6}$ alkyl group, wherein at least one $R^3$ per phenyl group and at least one $R^4$ is not hydrogen, wherein R is a $C_{1-10}$ hydrocarbyl group, preferably a $C_{1-4}$ hydrocarbyl group and more preferably a methyl group and X independently is a hydrogen atom, a halogen atom, a $C_{1-6}$ alkoxy group, a $C_{1-6}$ alkyl group, a phenyl group or a benzyl group and preferably chlorine, a benzyl group or a methyl group,

wherein the metallocene complex is preferably rac-anti-dimethylsilanediyl[2-methyl-4,8-bis-(4'-*tert*-butylphenyl)-1,5,6,7-tetrahydro-s-indacen-1-yl][2-methyl-4-(3',5'-dimethylphenyl)-5-methoxy-6-*tert*-butylinden-1-yl] zirconium dichloride, or rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-*tert*-butylinden-1-yl] zirconium dichloride, or rac-anti-dimethylsilanediyl[2-methyl-4,8-bis-(3',5'-dimethylphenyl)-1,5,6,7-tetrahydro-s-indacen-1-yl][2-methyl-4-(3',5'-di-*tert*-butylphenyl)-5-methoxy-6-tert-butylinden-1-yl] zirconium dichloride, or their corresponding zirconium dimethyl analogues, and
wherein the metallocene complex is more preferably rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-*tert*-butylinden-1-yl] zirconium dichloride.

**10.** Monolayer film according to any one of claims 1 to 9, wherein the film has a sealing initiation temperature SIT, determined on a 50 μm cast film as described in the experimental section, of less than 100°C, preferably in the range of

60 to 99°C, more preferably 75 to 98°C.

11. Monolayer film according to any one of claims 1 to 10, wherein the film has a haze, determined on a 50 μm cast film according to ASTM D1003, of less than 2.5%, preferably in the range of 0.2 to 2.5%, more preferably 0.5 to 2.3%.

12. Monolayer film according to any one of claims 1 to 11, wherein the film has at least one, preferably two or more or all of

- a Tensile Modulus (TM) in machine direction (MD), determined on a 50 μm cast film as described in the experimental section, of 350 MPa or more, preferably 350 to 600 MPa or 350 to 550 MPa;
- a Tensile Modulus (TM) in traverse direction (TD), determined on a 50 μm cast film as described in the experimental section, of 320 MPa or more, preferably 320 to 570 MPa or 320 to 520 MPa;
- a Tensile Strength (TS) in machine direction (MD), determined on a 50 μm cast film as described in the experimental section, of 30 MPa or more, preferably 30 to 70 MPa or 35 to 60 MPa;
- a Tensile Strength (TS) in traverse direction (TD), determined on a 50 μm cast film as described in the experimental section, of 25 MPa or more, preferably 25 to 65 MPa or 30 to 55 MPa;
- a normalized energy to peak force, determined on a 50 μm cast film as described in the experimental section, in the range of 30 to 55 J/mm, preferably 40 to 50 J/mm.

13. Monolayer film according to any one of claims 1 to 12, wherein the film is a cast film, which is optionally biaxially oriented, or a blown film.

14. Use of a polypropylene-based composition (PC) comprising, based on the total weight of the PC,

75.0 to 95.0 wt.-% of a single site catalysed ethylene-propylene-1-butene terpolymer base resin (SSC234) having

- an ethylene (C2) content, according to quantitative $^{13}$C-NMR spectroscopy analysis, in the range of 0.5 to 2.5 wt.-% with respect to the total weight of the SSC234;
- a 1-butene (C4) content, according to quantitative $^{13}$C-NMR spectroscopy analysis, in the range of 5.5 to 10.0 wt.-% with respect to the total weight of the SSC234;
- a melt flow rate $MFR_2$, according to ISO 1133 at 230°C and 2.16 kg load, in the range of 3.00 to 35.0 g/10min;
- a xylene cold solubles (XCS) content, according to ISO 16152 at 25°C, in the range of 0.1 to 4.5 wt.-% with respect to the total weight of the SSC234;
- a melting temperature ($T_m$), according to DSC as described in the experimental section, in the range of 120.0 to 140.0°C;
- a crystallization temperature ($T_c$), according to DSC as described in the experimental section, in the range of 80.0 to 115.0°C;

5.0 to 25.0 wt.-% of an ethylene-based elastomer having

- a density, according to ISO1183-1, in the range of 850.0 to 910.0 kg/m$^3$;
- a melt flow rate $MFR_2$, according to ISO 1133 at 190°C and 2.16 kg load, in the range of 0.10 to 80.0 g/10min

to produce a monolayer film or a layer of a multilayer film.

15. Use according to claim 14, wherein the polypropylene-based composition (PC) is the polypropylene-based composition (PC) as defined in any one of claims 2 to 9.

Europäisches Patentamt
European Patent Office
Office européen des brevets

# EUROPEAN SEARCH REPORT

Application Number
EP 24 19 3659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/157170 A1 (BOREALIS AG [AT]) 6 August 2020 (2020-08-06)<br>* claims 1,2,4,9,11-13,16 *<br>* page 32, line 28 - page 36; examples IE1-IE3; tables 1-3 *<br>* page 1, line 2 - line 11 *<br>* page 2, line 4 - line 26 *<br>* page 3, line 22 - line 29 *<br>* page 6, line 16 - line 22 *<br>* page 8, line 19 - line 22 *<br>* page 5, line 29 - line 30 *<br>----- | 1-15 | INV.<br>C08L23/14<br>C08L23/08<br>C08F210/06<br>C08F2/00<br>B32B27/32<br><br>ADD.<br>C08F210/08<br>C08F210/16<br>C08F4/6592 |
| A | WO 2018/069263 A1 (BOREALIS AG [AT]) 19 April 2018 (2018-04-19)<br>* claims 1,3,4,10,14 *<br>* page 4, line 1 - line 8 *<br>* page 4, line 24 - line 28 *<br>* page 5, line 4 - line 5 *<br>* page 5, line 15 - line 19 *<br>* page 5, line 26 - line 29 *<br>* page 28 - page 30; example IE3; table 1 *<br>----- | 1-15 | |

TECHNICAL FIELDS SEARCHED (IPC)

C08L
C08F
B32B

The present search report has been drawn up for all claims

3

| Place of search | Date of completion of the search | Examiner |
|---|---|---|
| Munich | 4 February 2025 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 19 3659

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| WO 2020157170 A1 | 06-08-2020 | CN 113366037 A | 07-09-2021 |
| | | EP 3917978 A1 | 08-12-2021 |
| | | ES 2970193 T3 | 27-05-2024 |
| | | US 2022186006 A1 | 16-06-2022 |
| | | WO 2020157170 A1 | 06-08-2020 |
| WO 2018069263 A1 | 19-04-2018 | CN 109790230 A | 21-05-2019 |
| | | EP 3526261 A1 | 21-08-2019 |
| | | KR 20190057355 A | 28-05-2019 |
| | | RU 2721727 C1 | 21-05-2020 |
| | | US 2019225723 A1 | 25-07-2019 |
| | | WO 2018069263 A1 | 19-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1358252 B1
- EP 2994309 B1
- WO 2016039416 A1
- EP 3064548 B1
- WO 2020239561 A1
- WO 2022167368 A1
- EP 3280768 B1
- WO 2019038134 A1
- EP 3567079 A1
- WO 2023046824 A1
- EP 3064548 A1
- WO 2016198273 A1
- WO 2020239603 A1
- WO 2021009189 A1
- WO 2021009190 A1
- WO 2021009191 A1
- WO 2021009192 A1
- WO 2019179959 A1
- WO 2017148970 A1


### Non-patent literature cited in the description


- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W** ; **WILHELM, M** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45, S1, S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **RESCONI, L.** ; **CAVALLO, L** ; **FAIT, A** ; **PIEMONTESI, F.** *Chem. Rev.*, 2000, vol. 100, 1253
- **A.J. BRANDOLINI** ; **D.D. HILLS**. NMR spectra of polymers and polymer additives. Marcel Deker Inc., 2000